# EUROPEAN PATENT SPECIFICATION

(11) **EP 0 740 974 B1**
(45) Date of publication and mention of the grant of the patent: **20.10.1999**
(21) Application number: 96106930.9
(22) Date of filing: 02.05.1996
(51) Int. Cl.: B23B 5/16

(54) **Apparatus particularly for preparing the outer surface of the end region of tubes made of plastics**
Gerät um insbesonderes Endflächen zum Bearbeiten am Ende von Plastikrohren
Apparail spécialement pour préparer la surface extérieure d'extrémités de tubes en plastique

(30) Priority: 05.05.1995 IT PD950034 U
(43) Date of publication of application: 06.11.1996
(73) Proprietor: RITMO s.r.l., 35033 Bresseo di Teolo (Padova) (IT)
(72) Inventor: De Franceschi, Bruno, 35100 Padova (IT)
(74) Representative: Modiano, Guido, Dr.-Ing.

(56) References cited:
- EP-A- 0 217 704
- CH-A- 338 757
- DE-A- 3 443 117
- DE-C- 346 648
- FR-A- 1 176 984
- GB-A- 821 862
- US-A- 2 351 217
- US-A- 2 746 497

## Description

The present invention relates to an apparatus particularly but not exclusively for preparing the outer surface of the end region of tubes according to the preamble of claim 1 and as known from CH-A-338,757.

Connecting devices of this kind that join adjacent portions of tubes made of plastics by hot welding are currently widespread.

These connecting devices are substantially constituted by a collar that surrounds the end regions of two mutually aligned thermoplastic tubes.

An electric resistor is inserted in the inner part of the connecting device.

By passing electric current through said resistor, the mutual melting of the end portions of the tubes is achieved.

Field practice, however, has pointed out that it is necessary to clean the ends of the tube to be welded before applying the connecting device in order to achieve optimum joining.

The cleaning of the ends relates both to the elimination of mud, moisture, and sand and to the removal of the thin layer of oxide that unavoidably forms on the outer surface of tubes made of plastics.

The end parts of tubes to be joined are currently mostly cleaned by hand.

Manual execution, however, entails various drawbacks, among which the fact that the operator must assess arbitrarily the amount of material that he is removing, although this assessment is very difficult to perform on site.

Furthermore, manual removal of the material is never uniform and can lead to differences in the diameter of the end regions of the tubes to be welded.

Furthermore, manual removal is time-consuming and ultimately expensive in terms of production times.

In order to eliminate these drawbacks, a wide variety of devices, adapted to eliminate in a substantially semiautomatic or automatic manner a layer of material and therefore to prepare the end part of the tubes to be welded, has been conceived.

The devices that are currently in use, despite achieving their task and substantially improving treatment quality and time requirements with respect to manually-performed preparation, have some drawbacks.

The main drawbacks are first of all a considerable constructive complexity, which often entails external power sources such as electric motors or the like.

Furthermore, these devices are complicated to install at the end of the tubes, with an expenditure of time for preparation and of specialized labor.

Furthermore, the ability of the above-described devices to slide along the tube to be prepared is still not fully satisfactory.

The aim of the present invention is to provide an apparatus that solves the above mentioned drawbacks shown by conventional devices.

In relation to this aim, an object of the present invention is to provide an apparatus that combines considerable constructive simplicity with an equally considerable ability to slide and speed in preparing the outer surface of the tubes.

Another object of the present invention is to provide an apparatus that can be assembled quickly at the end of a tube, minimizing the preparation and adjustment times.

Another object of the present invention is to provide an apparatus whose operation does not require specialized personnel.

Another object of the present invention is to provide an apparatus whose treatment quality is competitive with that of the conventional ones and which can be produced with conventional technologies and with costs that are competitive with respect to those of conventional devices.

This aim, these objects, and others which will become apparent hereinafter are achieved by an apparatus, particularly for preparing the outer surface of the end region of tubes made of plastics, which comprises anchoring means that are fixed, in the operating configuration, to the end region of a tube, a threaded pivot being movably coupled to said anchoring means so that it can rotate and perform a longitudinal translatory motion, said threaded pivot being arranged axially with respect to the tube in the operating configuration, supporting means for at least one tool being coupled to said pivot so that they can rotate rigidly, said tool being arrangeable so that it interferes with, and removes material from, the outer surface of the end region of the tube, said apparatus being characterized in that said anchoring means comprise a substantially cylindrical element, which is shaped at one end so as to form a circumferential groove and is shaped at the other end so as to form guides for elements for anchoring to the tube, said supporting means comprising a first telescopic rod-like arm, which is fixed radially at one of its ends to the free end of said threaded pivot, and a second rod-like arm, which is fixed at one of its ends to the free end of said first arm and supports said tool.

Further characteristics and advantages of the present invention will become apparent from the description of an embodiment thereof, illustrated only by way of non-limitative example in the accompanying drawings, wherein:
figure 1 is an axonometric view of an apparatus according to the invention;
figure 2 is a partially sectional view, taken along a diametrical plane, of the apparatus according to the invention;
figure 3 is an axonometric view of a detail of the apparatus according to the invention;
figure 4 is a partially sectional front view of another detail of the apparatus according to the invention;
figure 5 is a front orthographic projection view of the apparatus according to the invention;
figure 6 is an axonometric view of another detail of the apparatus according to the invention;
figure 7 is an enlarged-scale sectional view of a detail of a different embodiment of the telescopic arm included in the apparatus.

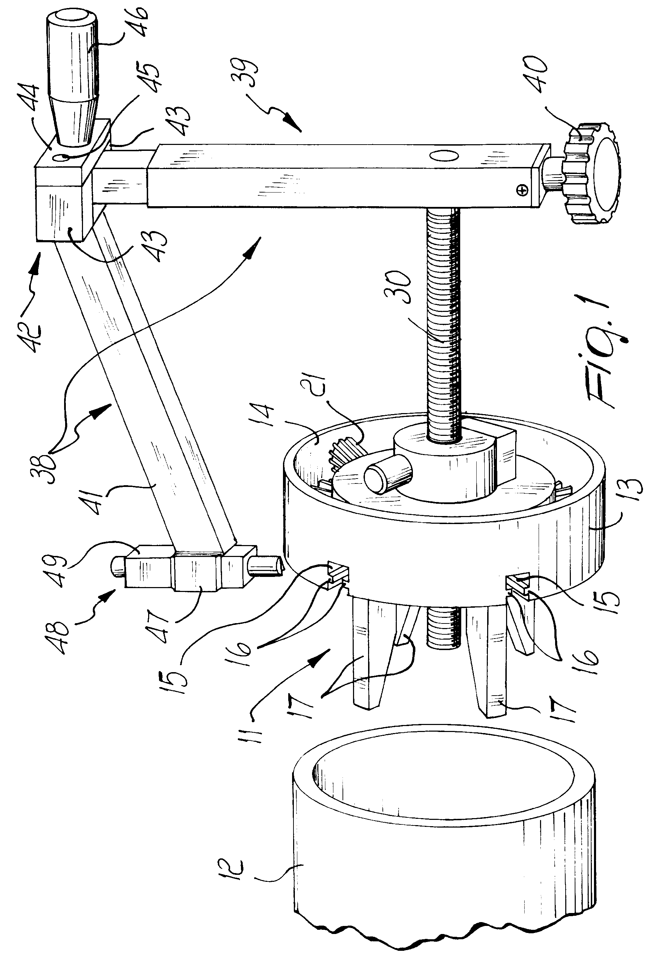

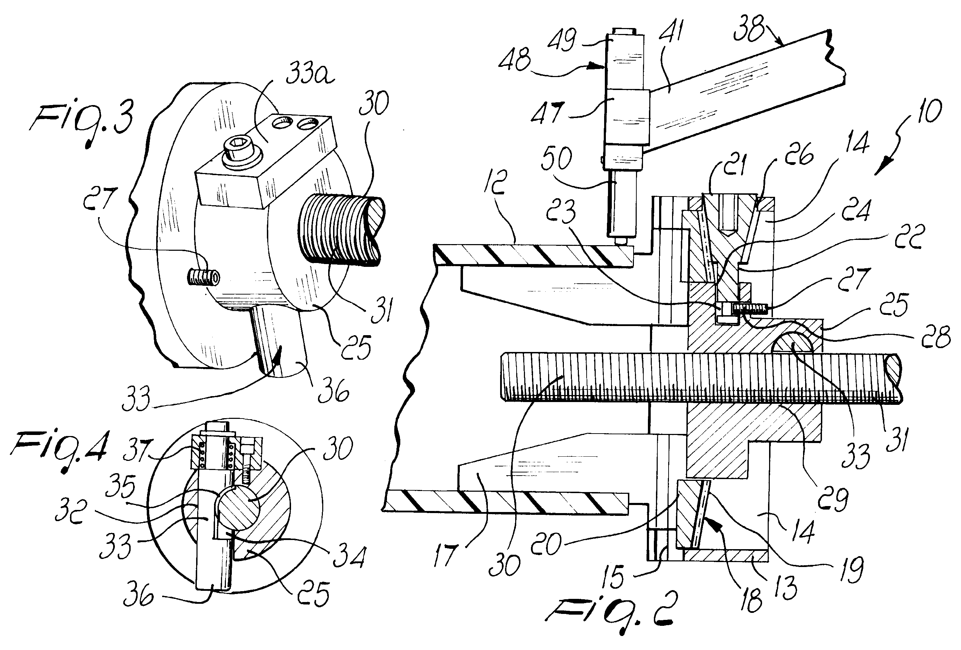

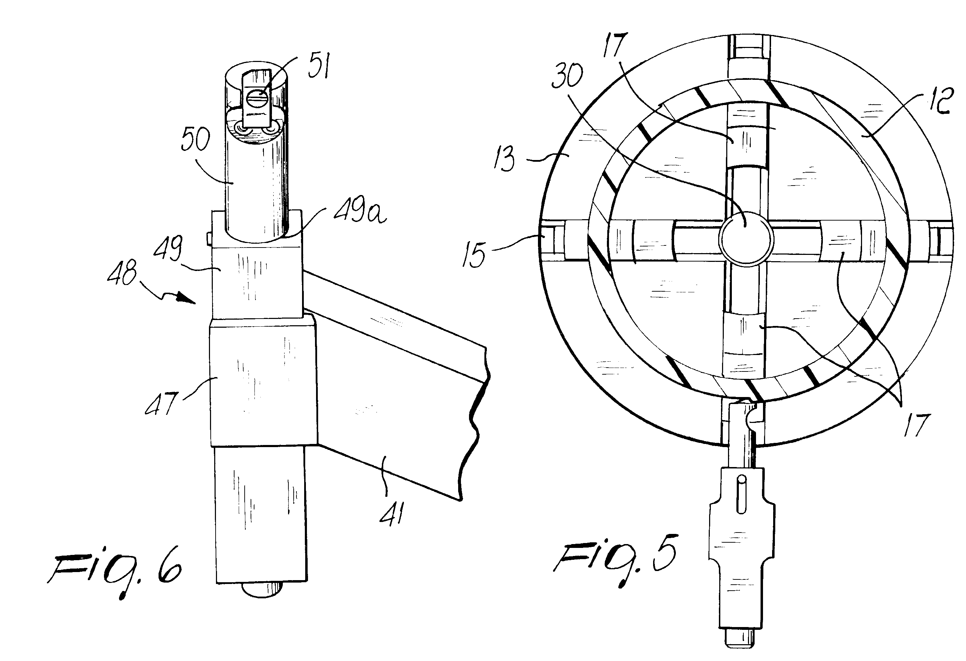

With particular reference to figures 1 to 6, an apparatus, particularly for preparing the outer surface of the end region of tubes made of plastics, according to the invention, is generally designated by the reference numeral 10.

The apparatus 10 comprises anchoring means, generally designated by the reference numeral 11.

The anchoring means 11 are fixed, in the operating configuration, to the end region of a tube, designated here by the reference numeral 12, and comprise a substantially cylindrical element 13 that is shaped at one end so as to form a circumferential groove 14 that is adjacent to the lateral surface; the other end is shaped so as to form, in this case, four radial guides 15 that are arranged in a cross-like pattern with respect to each other.

Each one of the radial guides 15 has, at the lateral surfaces that form them, two facing raised portions 16 that also run in a substantially radial direction.

A corresponding prism-shaped element 17 is furthermore slideably retained within each one of the radial guides 15; in the operating configuration, said prism-shaped element is pushed by actuation means, described hereinafter, against the inside surface of the tube 12.

Furthermore, each one of the radial guides 15 has an open bottom that is connected to the groove 14, which accommodates a ring 18 that has an annular surface 19, arranged opposite to the radial guides 15, shaped so as to form a set of teeth, whereas the other annular surface 20 is shaped so as to form a spiral-shaped guide, not shown in the figures, that constitutes said actuation means.

More specifically, each one of the prism-shaped elements 17 has, at the side that is adjacent to the annular surface 20, raised portions that are inserted in the spiral-shaped guide and force a sliding coupling of the corresponding prism-shaped elements 17 with respect to the ring 18.

The toothed annular surface 19 meshes with a bevel gear 21 that is rotatably coupled, along a radial direction, to the cylindrical element 13 and is actuated by actuation means, not shown in the figures, that lie outside the apparatus 10.

The gear 21 continues axially toward the axis of the element 13 with a cylindrical protrusion 22, whose free end is shaped so as to form a circumferential groove 23.

The cylindrical protrusion 22 fits in a hole 24 formed in the substantially cylindrical central body 25 of the element 13.

The gear 21, in addition to passing through the element 13 in a through hole 26 formed at the lateral surface thereof, is also fixed by means of a threaded element 27 inserted in a through hole 28 formed in a direction that is substantially perpendicular to the radial direction in the body 25; the free end of said threaded element enters the groove 23.

The element 13, at its central body 25, has an axial through hole 29 inside which a threaded pivot 30 is slidingly retained.

The threaded pivot 30 indeed has a surface that is shaped so as to form a helical groove 31 that has a constant pitch.

Coupling means are accommodated in a complementarily shaped seat 32 formed in the central body 25 tangentially to the threaded pivot 30 and can be activated and deactivated manually by the operator; their actuation forces the threaded pivot 30 to perform a longitudinal combined rotary and translatory motion along the axial direction.

Said coupling means are constituted in this case by a pivot 33 that is slidingly accommodated within the seat 32 and is shaped, in an approximately median region, so as to form a cavity 34 with a region 35 that is shaped complementarily to the threaded pivot 30 (thus forming a female thread portion) and couples with it in a preset position of the pivot 33, which has an end 36 that is available for the action of the operator.

Elastic return means are included in association with the pivot 33 and are constituted, in this case, by a helical spring 37 that has a fixed base within a perforated prism-shaped block 33a that is detachably fixed to the central body 25 at the seat 32.

The apparatus 10 also comprises support means, generally designated by the reference numeral 38, which are adapted to support, as will be described hereinafter, a tool that can be positioned so as to interfere with, and remove material from, the outside surface of the end region of the tube 12.

The support means 38 comprise a first telescopic rod-like arm 39 that has a substantially rectangular cross-section and is fixed, along a direction that is radial with respect to the element 13, to the free end of the threaded pivot 30 and can be elongated by means of a ring nut 40 that is arranged at its rigidly coupled end and actuates a per se known extension and retraction device that is arranged inside it.

The support means 38 also comprise a second rod-like arm 41 that has a substantially rectangular cross-section and has an end 42 that is rigidly coupled to the free end of the first rod-like arm 39.

More specifically, the end 42 is shaped so as to form two first tabs 43 that are substantially parallel to each other; a block 44 is fixed to their free ends by means of threaded elements 45.

A knob 46 is fixed to the block 44 and is substantially parallel to the threaded pivot 30; by means of said knob, the user can impart a rotary motion to the first rod-like arm 39.

The other end of the second rod-like arm 41 is shaped so as to form two second tabs 47, to which tool supporting means, generally designated by the reference numeral 48, are fixed.

The tool supporting means 48 are arranged substantially along a radial direction with respect to the tube 12.

The tool supporting means 48 also comprise a body 49 that is fixed to the second tabs 47.

The body 49, in this case, is prism-shaped with a square cross-section. A cylindrical element 50 is slidingly accommodated within a longitudinal through hole 49a formed in the body 49, and a tool 51 is fixed to the end of said cylindrical element that is directed toward the threaded pivot 30 upon assembly.

The cylindrical element 50 can slide along the body 49 to a limited extent in a direction that is substantially radial with respect to the tube 12, and is kept pushed against said tube by elastic means that are not shown in the figures.

In practice, operation is as follows: the apparatus 10 is placed at one end of the tube 12 whose outside surface must be treated.

The prism-shaped elements 17 are inserted in the hole of the tube 12, and by means of the action of the gear 21 and accordingly of the ring 18 said prism-shaped elements 17 move outward in a radial direction until they make contact with the inside surface of the tube 12, against which they abut and push, locking the apparatus 10.

The operator then adjusts, by means of the ring nut 40, the length of the first rod-like arm 39 and therefore ultimately of the tool 51 according to the diameter of the tube 12.

Then the operator, by acting on the knob 46, turns the second rod-like arm 41, performing the treatment proper.

The rotation of the second rod-like arm 41 is rigidly associated with the rotation of the threaded pivot 30, which by means of the helical groove 31 formed thereon and after engaging the pivot 33 performs a combined rotary and translatory motion, producing the advancement of the first rod-like element 39 and therefore of the treatment.

In practice it has been observed that the intended aim and objects have been achieved; in particular, it should be noted that the present invention is constructively simple and can be used quickly and easily by unskilled personnel.

The extremely easy sliding of the apparatus according to the invention along the tube should also be mentioned.

Easy applicability to the tube, as well as the safe anchoring of the apparatus according to the invention, should also be noted; its cost, in view of the above-mentioned constructive simplicity, is competitive with respect to conventional devices.

The present invention is susceptible of numerous modifications and variations, all of which are within the scope of the inventive concept.

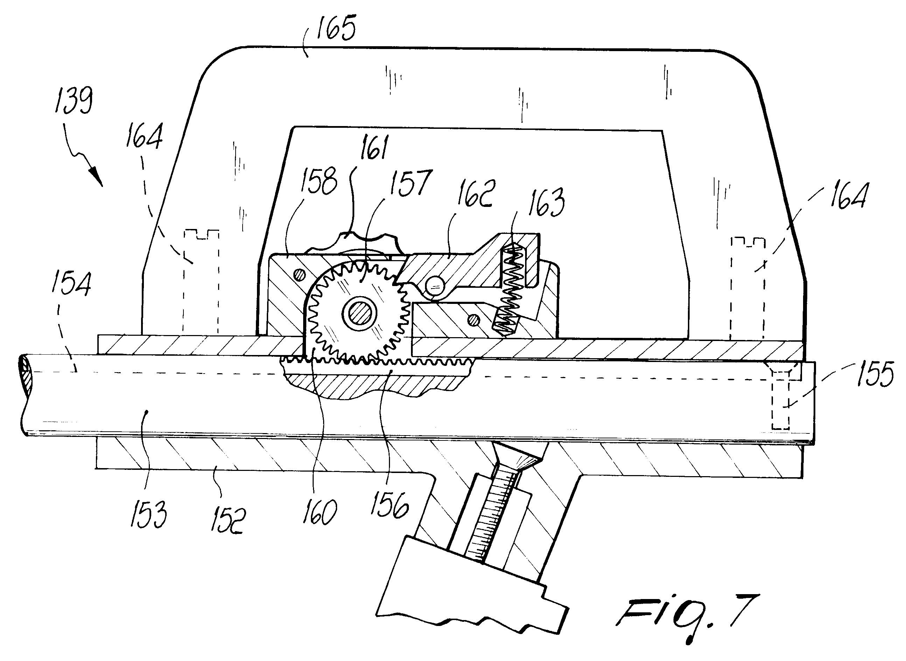

Thus, for example, with particular reference to figure 7, in a possible further embodiment, the telescopic arm, now designated by the reference numeral 139, comprises a sleeve 152 in which a rod-like element 153 can slide; a rack 156 is rigidly coupled thereto, is accommodated in an adapted longitudinal seat 154, and is fixed by means of screws 155.

A pinion 157 meshes with the rack 156 and is rotatably coupled to a support 158 that is fixed by means of screws, not shown in the figure, to the outside of the sleeve 152, and enters an adapted slot 160 of said sleeve 152.

The pinion 157 is rigidly coupled to a knob 161 that is coaxial thereto and is associated with a button-operated pawl 162 that includes a contrast spring 163.

A bridge-like handle 165 is fixed on the sleeve 152 by means of screws 164 on the region of the pinion 157 and of the pawl 162.

In practice, the pawl 162 allows rotations of the pinion 157, performed by means of the knob 161, in a single direction, and consequent longitudinal movements of the rod-like element 153.

In order to perform movements in the opposite direction, it is necessary to release the pawl 162, pressing it in contrast with the action of the spring 163 and lifting it from the pinion 157.

The details can be replaced with other technically equivalent elements.

The materials and the dimensions may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus, particularly for preparing the outer surface of the end region of tubes made of plastics, which comprises anchoring means (11) that are fixed, in the operating configuration, to the end region of a tube, a threaded pivot (30) being movably coupled to said anchoring means (11) so that it can rotate and perform a longitudinal translatory motion, said threaded pivot (30) being arranged axially with respect to the tube in the operating configuration, supporting means (38,48) for at least one tool (51) being coupled to said pivot (30) so that they can rotate rigidly, said tool (51) being arrangeable so that it interferes with, and removes material from, the outer surface of the end region of the tube, said supporting means (38,48) comprising a first telescopic rod-like arm (39,139) which is fixed radially at one of its ends to the free end of said threaded pivot (30), and a second rod-like arm (41), which is fixed at one of its ends to the free end of said first arm (39,139) and supports said tool (51), said apparatus being characterized in that said anchoring means (11) comprise a substantially cylindrical element (13), which is shaped at one end so as to form a circumferential groove (14) and is shaped at the other end so as to form radial guides (15) for prism shaped elements (17) for anchoring to the tube.

2. An apparatus according to claim 1, characterized in that it comprises four radial guides (15) that are arranged in a cross-shaped pattern with respect to each other, a prism-shaped element (17) being slideably retained in each one of said radial guides (15), said prism-shaped element (17) being pushed, in the operating configuration, by actuation means against the inside surface of the tube.

3. An apparatus according to claim 2, characterized in that each one of said radial guides (15) has an open bottom that is connected to said circumferential groove (14), which accommodates a ring (18) in which an annular surface (19) that lies opposite to said radial guides (15) is provided with teeth, whereas the other annular surface (20) is shaped so as to form a spiral-shaped guide within which complementarily shaped raised portions (16) are rigidly coupled so as to slide, said raised portions (16) protruding from the surfaces of each one of said prism-shaped elements (17) that face said radial guide (15).

4. An apparatus according to claim 3, characterized in that said toothed annular surface (19) meshes with a bevel gear (21) that is retained so that it can rotate about a direction that is substantially radial with respect to said cylindrical element (13).

5. An apparatus according to claim 1, characterized in that said cylindrical element (13) has an axial through hole (29) inside which said threaded pivot (30) is slidingly retained, the lateral surface of said pivot (30) being shaped so as to form a helical groove (31) that has a constant pitch.

6. An apparatus according to claim 5, characterized in that it comprises coupling means (32,33,36) that can be actuated and deactivated manually by the operator and are accommodated in said cylindrical element (13), the actuation of said means (32,33,36) forcing said threaded pivot (30) to perform a combined longitudinal rotary and translatory motion.

7. An apparatus according to claim 5, characterized in that said coupling means (32,33,36) comprise a pivot (33) that is slidingly accommodated within a seat (32) that is formed inside said cylindrical element (13) and lies substantially tangent to said threaded pivot (30), said pivot (33) being shaped so as to form a cavity (34) that has at least one region (35) of its surface that is shaped complementarily, forming a female thread portion, with respect to said threaded pivot (30), said region coupling with said pivot (33) in a preset position of said pivot (33), which has one end (36) that is available to the action of the operator.

8. An apparatus according to claim 7, characterized in that means, constituted by a helical spring (37), for elastic return to a preset position are associated with said pivot (33).

9. An apparatus according to claim 1, characterized in that tool supporting means (48) are fixed to the free end of said second rod-like element (41) so as to lie along a radial direction with respect to the tube.

10. An apparatus according to claim 9, characterized in that said tool supporting means comprise (48) a body (49) that is fixed to the free end of said second rod-like element (41).

11. An apparatus according to claim 10, characterized in that a cylindrical element (50) is slidingly accommodated in said body (49) inside a longitudinal through hole (49a) formed in said body (49), the tool (51) being fixed, upon assembly, to the end of said cylindrical element (50) that is directed toward said threaded pivot (30), said cylindrical element (50) being able to slide along said body (49), to a limited extent, and being kept pushed against the tube, in the operating configuration, by elastic means.

12. An apparatus according to claim 1, characterized in that said telescopic rod-like arm (139) comprises a sleeve (152) in which a rod-like element (153) can slide, said rod-like element (153) having a longitudinal rack (156) that meshes with a pinion (157) that is rotatably coupled to a support (158) that is fixed, by means of screws, to the outside of said sleeve (152), said pinion (157) entering a slot (160) of said sleeve (152) and being rigidly coupled to a knob (161) that is coaxial thereto and is associated with a button-operated pawl (162) that includes a contrast spring (163).

## Patentansprüche

1. Gerät, insbesondere zur Bearbeitung der Außenfläche der Endabschnitte von Rohren aus Kunststoff, umfassend eine Verankerungsvorrichtung (11), die in der Betriebskonfiguration an dem Endabschnitt des Rohres befestigt ist, einen Gewindezapfen (30), der mit der Verankerungsvorrichtung beweglich (11) verbunden ist, so daß er rotieren sowie eine längsgerichtete Schubbewegung ausführen kann, wobei der Gewindezapfen (30) in der Betriebskonfiguration in Bezug auf das Rohr axial angeordnet ist, Haltevorrichtungen (38, 48) für wenigstens ein Werkzeug (51), die so mit dem Zapfen (30) verbunden sind, daß sie starr rotieren können, wobei das Werkzeug (51) so angeordnet werden kann, daß es in die Außenfläche des Endabschnitts der Rohres eingreift und von dieser Material entfernt, wobei die Haltevorrichtungen (38, 48) einen ersten teleskopstangenartigen Arm (39, 139) umfassen, der an einem seiner Enden radial an dem freien Ende des Gewindezapfens (30) befestigt ist, sowie einen zweiten stangenartigen Arm (41), der an einem seiner Enden mit dem freien Ende des ersten Armes (39, 139) befestigt ist und der das Werkzeug (51) trägt, wobei das Gerät dadurch gekennzeichnet ist, daß die Verankerungsvorrichtung (11) ein im wesentlichen zylinderförmiges Element (13) umfaßt, das an einem Ende so geformt ist, daß es eine umlaufende Nut (14) bildet, und am anderen Ende so geformt ist, daß es radiale Führungen (15) für prismenförmige Elemente (17) zur Verankerung am Rohr bildet.

2. Gerät nach Anspruch 1, dadurch gekennzeichnet, daß es vier radiale Führungen (15) umfaßt, die in Bezug zueinander in einer kreuzförmigen Anordnung angeordnet sind, wobei ein prismenförmiges Element (17) in jeder der radialen Führungen (15) gleitbar aufgenommen ist und das prismenförmige Element (17) in der Betriebskonfiguration durch Betätigungsmittel gegen die Innenfläche des Rohres geschoben wird.

3. Gerät nach Anspruch 2, dadurch gekennzeichnet, daß jede der radialen Führungen (15) eine offene Unterseite aufweist, die mit der umlaufenden Nut (14) verbunden ist, welche einen Ring (18) aufnimmt, in dem eine ringförmige Fläche (19) vorgesehen ist, die den radialen Führungen (15) gegenüberliegt und mit Zähnen versehen ist, während die andere ringförmige Fläche (20) so geformt ist, daß sie eine spiralförmige Führung bildet, innerhalb derer komplementär geformte, erhabene Bereiche (16) gleitend verbunden sind, wobei die erhabenen Bereiche (16) von den Flächen eines jeden der prismenförmigen Elemente (17), die den radialen Führungen (15) zugewandt sind, hervorstehen.

4. Gerät nach Anspruch 3, dadurch gekennzeichnet, daß die gezahnte ringförmige Fläche (19) in ein Kegelrad (21) eingreift, daß so angeordnet ist, daß es in einer Richtung im wesentlichen radial zum zylinderförmigen Element (13) rotieren kann.

5. Gerät nach Anspruch 1, dadurch gekennzeichnet, daß das zylindrische Element (13) ein axiales, durchgehendes Loch (29) aufweist, in dem der Gewindezapfen (30) gleitbar aufgenommen ist, wobei die Seitenfläche des Zapfens (30) so geformt ist, daß sie eine schraubenförmige Nut (31) mit konstanter Ganghöhe bildet.

6. Gerät nach Anspruch 5, dadurch gekennzeichnet, daß es Kupplungsvorrichtungen (32, 33, 36) umfaßt, die manuell durch die bedienende Person aktiviert und deaktiviert werden können und die in dem zylinderförmigen Element (13) angeordnet sind, wobei durch das Aktivieren dieser Mittel (32, 33, 36) der Gewindezapfen (30) zu einer kombinierten, längsgerichteten Dreh- und Schubbewegung gezwungen wird.

7. Gerät nach Anspruch 5, dadurch gekennzeichnet, daß die Kupplungsvorrichtungen (32, 33, 36) einen Zapfen (33) umfassen, der gleitend in einem Sitz (32) angeordnet ist, welcher innen im zylinderförmigen Element (13) ausgebildet ist und im wesentlichen tangential zu dem Gewindezapfen (30) verläuft, wobei der Zapfen (33) so geformt ist, daß er einen Hohlraum (34) bildet, dessen Fläche wenigstens einen Bereich (35) aufweist, der in Bezug auf den Gewindezapfen (30) komplementär geformt ist, wobei dieser Bereich ein Innengewinde bildet und in einer vorbestimmten Position des Zapfens (33) mit dem Zapfen (33) verbunden ist, der ein Ende (36) aufweist, auf welches die bedienende Person einwirken kann.

8. Gerät nach Anspruch 7, dadurch gekennzeichnet, daß eine Vorrichtung, bestehend aus einer Schraubenfeder (37), für die elastische Rückstellung in eine vorbestimmte Position mit dem Zapfen (33) assoziiert ist.

9. Gerät nach Anspruch 1, dadurch gekennzeichnet, daß eine das Werkzeug haltende Vorrichtung (48) am freien Ende des zweiten stangenartigen Elementes (41), so daß sie in radialer Richtung zum Rohr liegt.

10. Gerät nach Anspruch 9, dadurch gekennzeichnet, daß die das Werkzeug haltende Vorrichtung (48) einen Körper (49) umfaßt, der an dem freien Ende des zweiten stangenartigen Elementes (41) befestigt ist.

11. Gerät nach Anspruch 10, dadurch gekennzeichnet, daß ein zylinderförmiges Element (50) gleitend in dem Körper (49) innerhalb eines in Längsrichtung verlaufenden durchgehenden Loches (49a) angeordnet ist, welches im Körper (49) ausgebildet ist, wobei das Werkzeug (51) bei der Montage an dem auf den Gewindezapfen (30) gerichteten Ende des zylinderförmigen Elementes (50) befestigt ist, wobei das zylinderförmige Element (50) in begrenztem Ausmaß entlang des Körpers (49) gleiten kann und in der Betriebskonfiguration durch elastische Mittel gegen das Rohr angedrückt bleibt.

12. Gerät nach Anspruch 1, dadurch gekennzeichnet, daß der teleskopstangenartige Arm (139) eine Buchse (152) umfaßt, in der ein stangenartiges Element (153) gleiten kann, wobei das stangenartige Element (153) eine längsgerichtete Zahnstange (156) aufweist, die in ein Kleinrad (157) eingreift, welches rotierbar mit einer Halterung (158) verbunden ist, die mittels Schrauben an der Außenseite der Buchse (152) befestigt ist, wobei das Kleinrad (157) in einen Spalt (160) der Buchse (152) eintritt und starr mit einem Knauf (161) verbunden ist, der koaxial mit dem Kleinrad angeordnet ist und der mit einer per Knopf betätigten Klinke (162) assoziiert ist, welche eine Gegenfeder (163) umfaßt.

## Revendications

1. Appareil, notamment pour préparer la surface extérieure de la région terminale de cubes en matière plastique, qui comprend des moyens de fixation (11) qui sont fixes, dans la configuration opérationnelle, sur la région terminale d'un tube, un pivot fileté (30) étant couplé de façon mobile auxdits moyens de fixation (11) de manière à pouvoir tourner et effectuer un mouvement de translation longitudinal, ledit pivot fileté (30) étant, dans la configuration opérationnelle, disposé axialement par rapport au tube, des moyens supports (38, 48) pour au moins un outil (51) étant couplés rigidement audit pivot (30) de manière a pouvoir tourner avec lui, ledit outil (51) pouvant être disposé pour interférer avec la surface extérieure de la région terminale du tube et pour en enlever de la matière, lesdits moyens supports (38, 48) comprenant un premier bras télescopique (39, 139) analogue à une tige, qui est fixé radialement, à l'une de ses extrémités, sur l'extrémité libre dudit pivot fileté (30), et un deuxième bras analogue à une tige (41), qui est fixé, à l'une de ses extrémités, sur l'extrémité libre dudit premier bras (39, 139) et supporte ledit outil (51), ledit appareil étant caractérisé en ce que lesdits moyens de fixation (11) comprennent un élément sensiblement cylindrique (13), dont une extrémité est configurée de façon à former une gorge circonférentielle (14) et dont l'autre extrémité est configurée de façon à former des guides radiaux (15) pour des élément prismatiques (17) à des fins de fixation sur le tube.

2. Appareil selon la revendication 1, caractérisé en ce qu'il comprend quatre guides radiaux (15) disposés en croix les uns par rapport aux autres, un élément prismatique (17) étant retenu, coulissant, dans chacun desdits guides radiaux (15), ledit élément prismatique (17) étant poussé, dans la configuration opérationnelle, par des moyens d'actionnement contre la surface intérieure du tube.

3. Appareil selon la revendication 2, caractérisé en ce que chacun desdits guides radiaux (15) a un fond ouvert qui se raccorde à ladite gorge circonférentielle (14), qui loge un anneau (18), dans lequel une surface annulaire (19) opposée auxdits guides radiaux (15) est pourvue de dents, tandis que l'autre surface annulaire (20) est configurée pour former un guide spiral à l'intérieur duquel des portions en relief de forme complémentaire (16) sont rigidement couplées de façon à coulisser, lesdites portions en relief (16) se projetant des surfaces de chacun desdits éléments prismatiques (17) qui sont en vis-à-vis desdits guides radiaux (15).

4. Appareil selon la revendication 3, caractérise en ce que ladite surface annulaire dentée (19) engrène avec un pignon conique (21) qui est retenu de façon à pouvoir tourner autour d'une direction sensiblement radiale par rapport audit élément cylindrique (13).

5. Appareil selon la revendication 1, caractérise en ce que ledit élément cylindrique (13) a un trou traversant axial (29) à l'intérieur duquel ledit pivot fileté (30) est retenu de manière coulissante, la surface latérale dudit pivot (30) étant configurée de façon à former une rainure hélicoïdale (31) ayant un pas constant.

6. Appareil selon la revendication 5, caractérisé en ce qu'il comprend des moyens de couplage (32, 33, 36) qui peuvent être actionnés et mis hors service manuellement par l'utilisateur et qui sont logés dans ledit élément cylindrique (13), l'actionnement desdits moyens (32, 33, 36) forçant ledit pivot fileté (30) à effectuer un mouvement combiné de rotation et de translation longitudinale.

7. Appareil selon la revendication 5, caractérise en ce que lesdits moyens de couplage (32, 33, 36) comprennent un pivot (33) qui est logé, coulissant, à l'intérieur d'un siège (32) forme à l'intérieur dudit élément cylindrique (13) et pratiquement tangent audit pivot fileté (30), ledit pivot (33) étant configuré de façon à former une cavité (34) dont au moins une région (35) de la surface est configurée de façon complémentaire audit pivot fileté (30), formant ainsi une région filetée femelle, ladite région couplant avec ledit pivot (33) dans une position prédéterminée dudit pivot (33), lequel a une extrémité (36) disponible pour l'action de l'utilisateur.

8. Appareil selon la revendication 7, caractérisé en ce que des moyens, constitués par un ressort hélicoïdal (37), pour un rappel élastique à une position prédéterminée, sont associés audit pivot (33).

9. Appareil selon la revendication 1, caractérisé en ce que des moyens supports d'outil (48) sont fixés sur l'extrémité libre dudit deuxième élément analogue à une tige (41) de manière à s'étendre dans une direction radiale par rapport au tube.

10. Appareil selon la revendication 9, caractérisé en ce que lesdits moyens supports d'outil (48) comprennent un corps (49) fixé sur l'extrémité libre dudit deuxième élément analogue à une tige (41).

11. Appareil selon la revendication 10, caractérisé en ce qu'un élément cylindrique (50) est logé, coulissant, à l'intérieur dudit corps (49) à l'intérieur d'un trou traversant longitudinal (49a) formé dans ledit corps (49), l'outil (51) étant fixé, lors du montage, sur l'extrémité dudit élément cylindrique (50) qui est dirigée vers ledit pivot fileté (30), ledit élément cylindrique (50) pouvant coulisser sur une distance limitée le long dudit corps (49) et étant maintenu, dans la configuration opérationnelle, poussé contre le tube par des moyens élastiques.

12. Appareil selon la revendication 1, caractérisé en ce que ledit bras télescopique (139) analogue à une tige comprend un manchon (152) dans lequel peut coulisser un élément analogue à une tige (153), ledit élément analogue à une tige (153) ayant une crémaillère longitudinale (156) qui engrène avec un pignon (157) couplé tournant, à un support (158) qui est fixé, au moyen de vis, sur l'extérieur du manchon (152), ledit pignon (157) pénétrant dans une fente (160) dudit manchon (152) et étant solidarisé à une molette (161) qui lui est coaxiale et qui est associée à un cliquet (162) actionné par un bouton, ce cliquet contenant un ressort antagoniste (163).
